# DEMANDE DE BREVET EUROPEEN

(11) **EP 4 848 509 A1**
(43) Date de publication de la demande: **02.12.2026**
(21) Numéro de dépôt: 26178848.3
(22) Date de dépôt: 15.05.2026
(51) Int. Cl.: H02H 7/08, H02H 3/02, H02P 3/22, H02P 29/024, H02H 7/122, H02K 11/20

(54) **INSTALLATION ÉLECTRIQUE COMPRENANT AU MOINS UNE MOTORISATION ÉLECTRIQUE ÉQUIPÉE D'AU MOINS UNE PROTECTION INTERNE PILOTABLE EN CAS DE DÉTECTION D'UN COURT-CIRCUIT**

(30) Priorité: 28.05.2025 FR 2505749
(71) Demandeur: AIRBUS OPERATIONS (S.A.S.), 31060 Toulouse (FR)
(72) Inventeur: DUFLOS DE SAINT AMAND, Vincent, 31060 Toulouse (FR); BUSSY, Emmanuel, 31060 Toulouse (FR)
(74) Mandataire: Fantin, Laurent

(57) **Abrégé**

L'invention a pour objet une installation électrique qui comprend au moins un générateur électrique (34), au moins une motorisation électrique (36) ainsi qu'au moins un système de découplage (40) configuré pour découpler le générateur électrique (34) en cas de détection d'un court-circuit.

Selon l'invention, la motorisation électrique (36) comprend au moins une protection interne moteur (52.1, 52.2, 52.3) pilotable en cas de détection d'un court-circuit et configurée pour occuper un état ouvert dans lequel la motorisation électrique (36) peut être alimentée en énergie électrique et un état fermé dans lequel ladite au moins une protection interne moteur (52.1) génère un court-circuit interne à la motorisation électrique (36), empêchant la propagation d'au moins un courant de régénérescence vers le réseau électrique (32).

Cette solution permet de ne pas alimenter un éventuel court-circuit par la motorisation électrique (36) à la suite de sa détection.

## Description

La présente demande se rapporte à une installation électrique comprenant au moins une motorisation électrique équipée d'au moins une protection interne pilotable en cas de détection d'un court-circuit.

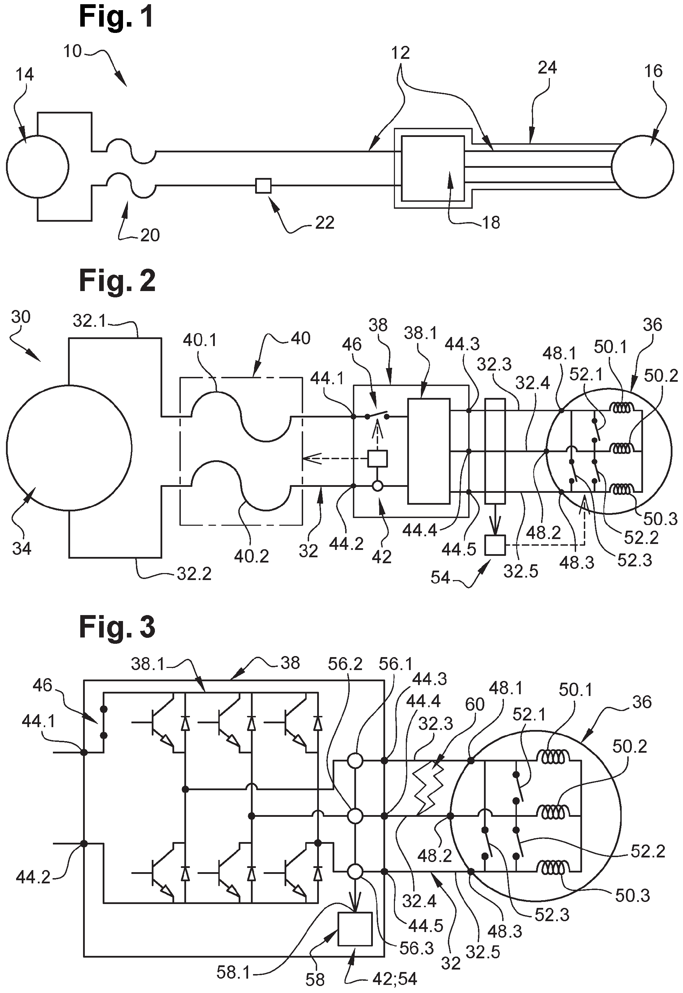

Selon un mode de réalisation visible sur la figure 1, une installation électrique 10 d'un aéronef comprend :
- au moins un réseau électrique 12,
- au moins un générateur électrique 14 configuré pour générer un courant,
- au moins une motorisation électrique 16, comme un moteur à aimants permanents par exemple, alimentée par le générateur électrique 14 et accouplée à une hélice par exemple,
- une unité de commande moteur 18 (également appelée MCU pour Motor Control Unit en anglais) configurée pour contrôler et gérer le fonctionnement de la motorisation électrique 16.

L'installation électrique 10 comprend également au moins un premier système de découplage 20 du générateur électrique 14, configuré pour occuper un état fermé dans lequel le générateur électrique 14 est électriquement relié au réseau électrique 12 et un état ouvert dans lequel le générateur électrique 14 est isolé du réseau électrique 12 ainsi qu'au moins un système de détection 22 d'un courant de court-circuit, comme un micro-contrôleur de l'unité de commande moteur 18 par exemple, configuré pour contrôler l'état du premier système de découplage 20.

Ainsi, lorsque le système de détection 22 détecte un courant de court-circuit, il commande le passage du premier système de découplage 20 à l'état ouvert. Dès lors, le générateur électrique 14 est isolé du réseau électrique 12 et n'alimente plus le court-circuit.

Dans le cas d'une motorisation électrique 16 accouplée à une hélice, même si elle n'est plus alimentée en énergie électrique, la motorisation électrique 16 continue à tourner en raison notamment de l'énergie cinétique emmagasinée par le rotor de la motorisation électrique 16 et/ou par l'hélice. Dans ces circonstances, la motorisation électrique 16 devient un générateur électrique et produit un courant de régénérescence qui alimente le réseau électrique et par conséquent le court-circuit. Aussi, le découplage du générateur électrique 14 n'est pas suffisant pour éteindre le court-circuit le plus rapidement possible.

Pour limiter les risques d'endommagement de l'installation électrique 10 et/ou de tout autre équipement ou partie de l'aéronef en raison du court-circuit alimenté par la motorisation électrique 16, une première solution consiste à prévoir une protection renforcée 24 du réseau électrique 12 ou, comme illustré sur la figure 1, d'une partie du réseau électrique 12 et de l'unité de commande moteur 18, cette dernière étant configurée pour bloquer tout courant en direction du générateur électrique 14.

Selon une deuxième solution non représentée sur les figures, le réseau électrique 12 comprend, en plus du premier système de découplage intercalé entre le générateur électrique 14 et l'unité de commande moteur 18, un deuxième système de découplage distinct de la motorisation électrique 16 et intercalé entre la motorisation électrique 16 et l'unité de commande moteur 18, le deuxième système de découplage étant configuré pour occuper un état fermé dans lequel la motorisation électrique 16 est électriquement reliée au réseau électrique 12 et un état ouvert dans lequel la motorisation électrique 16 est isolée du réseau électrique 12, l'état de ce deuxième système de découplage étant contrôlé par le système de détection 22.

Même si ces deux solutions permettent de limiter les risques d'endommagement de l'installation électrique 10 et/ou de tout autre équipement ou partie de l'aéronef, elles ne donnent pas pleinement satisfaction car elles induisent une augmentation significative de la masse embarquée de l'aéronef.

La présente invention vise à remédier à tout ou partie des inconvénients de l'art antérieur. A cet effet, l'invention a pour objet une installation électrique comprenant :
- au moins un réseau électrique,
- au moins un générateur électrique,
- au moins une motorisation électrique comportant plusieurs bornes d'entrée reliées au réseau électrique,
- au moins un système de découplage configuré pour découpler le générateur électrique,
- au moins un système de détection configuré pour détecter un courant de court-circuit et contrôler le système de découplage.

Selon l'invention, la motorisation électrique comprend au moins une protection interne moteur pilotable en cas de détection d'un court-circuit et configurée pour occuper un état ouvert dans lequel la motorisation électrique peut être alimentée en énergie électrique et un état fermé dans lequel ladite au moins une protection interne moteur génère un court-circuit interne à la motorisation électrique empêchant la propagation d'au moins un courant de régénérescence vers le réseau électrique.

Cette solution permet, sans significativement impacter la masse embarquée, d'éteindre le plus rapidement possible un éventuel court-circuit en empêchant qu'il ne soit alimenté par le courant de régénérescence produit par la motorisation électrique, ce qui limite les risques d'endommagement de l'installation électrique en amont de la motorisation électrique.

Selon une autre caractéristique, ladite au moins une protection interne moteur est configurée pour isoler les deux bornes d'entrée d'au moins un couple de bornes d'entrée à l'état ouvert et les relier à l'état fermé.

Selon une autre caractéristique, la motorisation électrique comprend une protection interne moteur pour chaque couple de bornes d'entrée.

Selon une autre caractéristique, la motorisation électrique comprend des première, deuxième et troisième bornes d'entrée, une première protection interne moteur reliant les première et deuxième bornes d'entrée, une deuxième protection interne moteur reliant les deuxième et troisième bornes d'entrée ainsi qu'une troisième protection interne moteur reliant les première et troisième bornes d'entrée.

Selon une autre caractéristique, ladite au moins une protection interne moteur est irréversible et configurée pour occuper un état ouvert et un état définitivement fermé à réception d'un signal de commande.

Selon une autre caractéristique, ladite au moins une protection interne moteur est un interrupteur pyrotechnique.

Selon une autre caractéristique, ladite au moins une protection interne moteur est réversible et configurée pour occuper alternativement un état ouvert et un état fermé. Selon une autre caractéristique, l'installation électrique comprend au moins un système de détection configuré pour détecter un courant de court-circuit dans le réseau électrique et contrôler l'état ouvert/fermé d'au moins ladite protection interne moteur de la motorisation électrique.

Selon une autre caractéristique, les systèmes de détection configurés pour contrôler les états du système de découplage et de ladite au moins une protection interne moteur forment un unique et même système de détection.

Selon une autre caractéristique, le système de détection est configuré pour simultanément contrôler toutes les protections internes moteurs.

L'invention a également pour objet un aéronef comprenant au moins une installation électrique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique d'une installation électrique d'un aéronef illustrant un mode de réalisation de l'art antérieur, l'installation électrique fonctionnant normalement,
- La figure 2 est une représentation schématique d'une installation électrique d'un aéronef illustrant un mode de réalisation de l'invention,
- La figure 3 est une représentation schématique d'une partie d'une installation électrique d'un aéronef illustrant un mode de réalisation de l'invention lors de l'apparition d'un court-circuit, la motorisation électrique comprenant des protections internes moteurs à l'état désactivé,
- La figure 4 est une représentation schématique de la partie de l'installation électrique visible sur la figure 3, les protections internes moteurs de la motorisation électrique étant activées,
- La figure 5 est une représentation schématique de la partie de l'installation électrique visible sur la figure 4, les protections internes moteurs à l'état activé empêchant la propagation des courants de régénérescence,
- La figure 6 est une représentation schématique de la partie de l'installation électrique visible sur la figure 5, le court-circuit étant éteint, les protections internes moteurs à l'état activé empêchant la propagation des courants de régénérescence.

Selon un mode de réalisation visible sur la figure 2, une installation électrique 30 comprend :
- au moins un réseau électrique 32,
- au moins un générateur électrique 34 configuré pour générer un courant,
- au moins une motorisation électrique 36 alimentée par le générateur électrique 34,
- au moins une unité de commande moteur 38 (également appelée MCU pour Motor Control Unit en anglais) configurée pour contrôler et gérer le fonctionnement de la motorisation électrique 36,
- au moins un système de découplage 40 configuré pour découpler le générateur électrique 34, occupant un état fermé dans lequel le générateur électrique 34 est relié électriquement à au moins une partie du réseau électrique 32 comportant la motorisation électrique 36 et un état ouvert dans lequel le générateur électrique 34 est isolé de ladite au moins une partie du réseau électrique 32 comportant la motorisation électrique 36,
- au moins un système de détection 42 configuré pour détecter un courant de court-circuit et contrôler l'état du système de découplage 40 en fonction du courant de court-circuit détecté.

Selon une application, un aéronef comprend au moins une telle installation électrique 30. Selon un mode de réalisation, la motorisation électrique 36 est un moteur à aimants permanents. Bien entendu, l'invention n'est pas limitée à ce mode de réalisation.

Selon une configuration, la motorisation électrique 36 est accouplée à une hélice. Bien entendu, l'invention n'est pas limitée à cette configuration. Plus généralement, la motorisation électrique 36 est accouplée à un dispositif et comprend un rotor qui continue à tourner, en raison par exemple de l'énergie cinétique emmagasinée par ledit dispositif ou par ledit rotor, même lorsque la motorisation électrique 36 n'est plus alimentée en énergie électrique. Dans ce cas, la motorisation électrique 36 devient un générateur électrique et produit au moins un courant de régénérescence.

Selon une configuration, le réseau électrique 32 comprend un réseau électrique amont qui comporte des premier et deuxième conducteurs électriques amont 32.1, 32.2 reliant le générateur électrique 34 et l'unité de commande moteur 38 ainsi qu'un réseau électrique aval qui comporte des premier, deuxième et troisième conducteurs électriques aval 32.3, 32.4, 32.5 reliant l'unité de commande moteur 38 et la motorisation électrique 36. Le système de découplage 40 comprend, au niveau d'au moins un conducteur électrique parmi les premier et deuxième conducteurs électriques amont 32.1, 32.2, au moins un coupe-circuit 40.1 ou tout autre composant électrique configuré pour occuper un état fermé dans lequel il permet à un courant de circuler entre le générateur électrique 34 et l'unité de commande moteur 38, notamment dans l'un des conducteurs électriques amont 32.1, 32.2, ainsi qu'un état ouvert dans lequel il empêche un courant électrique de circuler entre le générateur électrique 34 et l'unité de commande moteur 38, notamment dans l'un desdits conducteurs électriques amont 32.1, 32.2. Selon un agencement, le système de découplage 40 comprend un coupe-circuit 40.1, 40.2 pour chaque conducteur électrique amont 32.1, 32.2.

Bien entendu, l'invention n'est pas limitée à cette configuration pour le réseau électrique 32 et le système de découplage 40.

Selon un mode de réalisation, l'unité de commande moteur 38 comprend un convertisseur monophasé-triphasé 38.1. Selon un agencement, l'unité de commande moteur 38 comprend des première et deuxième bornes d'entrée 44.1, 44.2 auxquelles sont respectivement reliés les premier et deuxième conducteurs électriques amont 32.1, 32.2 ainsi que des première, deuxième et troisième bornes de sortie 44.3, 44.4, 44.5 auxquelles sont respectivement reliés les premier, deuxième et troisième conducteurs électriques aval 32.3, 32.4, 32.5. Les première et deuxième bornes d'entrée 44.1, 44.2 ainsi que les première, deuxième et troisième bornes de sortie 44.3, 44.4, 44.5 sont reliées au convertisseur monophasé-triphasé 38.1.

Selon une configuration, l'unité de commande moteur 38 est configurée pour bloquer, dans au moins un état, tout courant provenant du réseau électrique aval vers le réseau électrique amont.

Selon un mode de réalisation, l'unité de commande moteur 38 comprend au moins une protection interne MCU 46, située entre la première ou deuxième borne d'entrée 44.1, 44.2 et le convertisseur monophasé-triphasé 38.1. Selon un agencement, la protection interne MCU 46 comprend un coupe-circuit ou un interrupteur configuré pour occuper un état fermé, en l'absence d'un courant de court-circuit, dans lequel il permet à un courant de le traverser et un état ouvert, lorsqu'un courant de court-circuit est détecté, dans lequel il empêche un courant de le traverser. L'état fermé ou ouvert de la protection interne MCU 46 est commandé par un système de détection d'un courant de court-circuit spécifique, dédié à la protection interne MCU 46, ou par le système de détection 42 d'un courant de court-circuit assurant la commande du système de découplage 40 du générateur électrique 34.

Bien entendu, l'invention n'est pas limitée à ce mode de réalisation pour l'unité de commande moteur 38.

Selon un mode de réalisation de l'invention, la motorisation électrique 36 comprend plusieurs bornes d'entrée 48.1, 48.2, 48.3 reliées au réseau électrique 32, généralement une pour chaque conducteur électrique aval 32.3, 32.4, 32.5, plusieurs bobines 50.1, 50.2, 50.3 ainsi qu'au moins une protection interne moteur 52.1 pilotable en cas de détection d'un court-circuit et configurée pour occuper un état ouvert dans lequel la protection interne moteur 52.1 isole les deux bornes d'entrée 48.1, 48.2, 48.3 d'au moins un couple de bornes d'entrée 48.1, 48.2, 48.3 et un état fermé dans lequel la protection interne moteur 52.1 relie les deux bornes d'entrée 48.1, 48.2, 48.3 d'au moins un couple de bornes d'entrée 48.1, 48.2, 48.3.

Selon une configuration, la motorisation électrique 36 comprend une protection interne moteur 52.1, 52.2, 52.3 pour chaque couple de bornes d'entrée 48.1, 48.2, 48.3. Ainsi, la motorisation électrique 36 comprend une première protection interne moteur 52.1 reliant les première et deuxième bornes d'entrée 48.1, 48.2, une deuxième protection interne moteur 52.2 reliant les deuxième et troisième bornes d'entrée 48.2, 48.3 ainsi qu'une troisième protection interne moteur 52.3 reliant les première et troisième bornes d'entrée 48.1, 48.3. Selon cet agencement, chaque protection interne moteur 52.1, 52.2, 52.3 est située entre l'une des bornes d'entrée 48.1, 48.2, 48.3 de la motorisation électrique 36 et une des bobines 50.1, 50.2, 50.3.

Selon un premier mode de réalisation privilégié, au moins une protection interne moteur 52.1, 52.2, 52.3 est irréversible et à usage unique. Dans ce cas, en fonctionnement « normal », lorsqu'aucun courant de court-circuit n'est détecté, ladite au moins une protection interne moteur 52.1, 52.2, 52.3 est à l'état ouvert. A réception d'un signal de commande, ladite au moins une protection interne moteur 52.1, 52.2, 52.3 bascule définitivement à l'état fermé. Dès lors, il est nécessaire de changer ladite au moins une protection interne moteur 52.1, 52.2, 52.3 par une nouvelle protection interne moteur 52.1, 52.2, 52.3 à l'état ouvert. A titre d'exemple, chaque protection interne moteur 52.1, 52.2, 52.3 est un interrupteur pyrotechnique configuré pour occuper un état ouvert en l'absence de court-circuit détecté et un état fermé à réception d'un signal de commande. Ce premier mode de réalisation a pour avantage de fortement réduire la masse embarquée par rapport aux modes de réalisation de l'art antérieur.

Selon un deuxième mode de réalisation, au moins une protection interne moteur 52.1., 52.2, 52.3 est réversible et configurée pour alternativement occuper un état ouvert et un état fermé. Selon ce deuxième mode de réalisation, chaque protection interne moteur 52.1, 52.2, 52.3 comprend un interrupteur réversible configuré pour occuper un état fermé dans lequel il permet à un courant de le traverser et un état ouvert dans lequel il empêche un courant de le traverser. En fonctionnement « normal », lorsqu'aucun courant de court-circuit n'est détecté, chaque protection interne moteur 52.1, 52.2, 52.3 est à l'état ouvert. Chaque protection interne moteur 52.1, 52.2, 52.3 est configurée pour basculer de l'état ouvert à l'état fermé à réception d'un signal de commande.

Selon un mode de fonctionnement, chaque protection interne moteur 52.1, 52.2, 52.3 est configurée pour basculer de l'état ouvert à l'état fermé à réception d'un signal de commande, rester à l'état fermé tant qu'il reçoit le signal de commande et basculer de l'état fermé à l'état ouvert dès qu'il ne reçoit plus le signal de commande.

Selon un autre mode de fonctionnement, chaque protection interne moteur 52.1, 52.2, 52.3 est configurée pour basculer de l'état ouvert à l'état fermé à réception d'un signal de commande, rester à l'état fermé pendant une durée donnée et revenir automatiquement à l'état ouvert à l'expiration de la durée donnée.

Selon un autre mode de fonctionnement, chaque protection interne moteur 52.1, 52.2, 52.3 est configurée pour basculer de l'état ouvert à l'état fermé à réception d'un premier signal de commande et basculer de l'état fermé à l'état ouvert à réception d'un deuxième signal de commande.

Bien entendu, l'invention n'est pas limitée à ces modes de réalisation pour la (ou les) protection(s) interne(s) moteur(s) 52.1, 52.2, 52.3. Quel que soit le mode de réalisation, au moins une protection interne moteur 52.1 est configurée pour occuper un état ouvert dans lequel la motorisation électrique 36 peut être alimentée en énergie électrique et un état fermé dans lequel ladite au moins une protection interne moteur 52.1 génère un court-circuit interne à la motorisation électrique 36, empêchant la propagation d'au moins un courant de régénérescence 62 vers le réseau électrique 32, ce qui permet d'éteindre plus rapidement un éventuel court-circuit.

Selon un mode de réalisation, l'installation électrique 30 comprend au moins un système de détection 54 configuré pour détecter un courant de court-circuit dans le réseau électrique 32, plus particulièrement au niveau du réseau électrique aval entre l'unité de commande moteur 38 et la motorisation électrique 36, et contrôler l'état ouvert/fermé d'au moins une protection interne moteur 52.1, 52.2, 52.3 de la motorisation électrique 36. Selon un mode de fonctionnement, le système de détection est configuré pour générer un signal de commande lorsqu'il détecte un courant de court-circuit et le transmettre à au moins une protection interne moteur 52.1, 52.2, 52.3 de la motorisation électrique 36 de manière à provoquer un passage à l'état fermé de ladite protection interne moteur 52.1, 52.2, 52.3.

Selon une configuration, le système de détection 54 est configuré pour simultanément contrôler toutes les protections internes moteurs 52.1, 52.2, 52.3 en transmettant le signal de commande à toutes les protections internes moteurs 52.1, 52.2, 52.3.

Selon un mode de réalisation, les systèmes de détection 42, 54 configurés pour contrôler les états du système de découplage 40 du générateur électrique 34, de chaque protection interne moteur 52.1, 52.2, 52.3 de la motorisation électrique 36 ainsi qu'éventuellement de la protection interne MCU 46 ne forment qu'un unique et même système de détection.

Selon un autre mode de réalisation, l'installation électrique 30 comprend un premier système de détection 42 configuré pour contrôler l'état du système de découplage 40 du générateur électrique 34 et éventuellement la protection interne MCU 46 ainsi qu'un deuxième système de détection 54, différent et distinct du premier système de détection 42, configuré pour contrôler l'état de chaque protection interne moteur 52.1, 52.2, 52.3 de la motorisation électrique 36.

Selon un mode de réalisation visible sur la figure 3, le système de détection 54 d'un courant de court-circuit comprend au moins un ampèremètre 56.1 ainsi qu'au moins un microcontrôleur 58 qui présente au moins une entrée 58.1 reliée à l'ampèremètre 56.1 et une sortie via laquelle est transmis au moins un signal de commande lorsqu'un courant de court-circuit est détecté.

Selon une configuration visible sur les figures 3 à 6, le système de détection 54 d'un courant de court-circuit est intégré à l'unité de commande moteur 38. Selon une autre configuration visible sur la figure 2, le système de détection 54 d'un courant de court-circuit est distinct de l'unité de commande moteur 38.

Selon un agencement visible sur les figures 3 à 6, le système de détection 54 comprend un ampèremètre 56.1, 56.2, 56.3 pour chacune des première, deuxième et troisième bornes de sortie 44.3, 44.4, 44.5 de l'unité de commande moteur 38, lesdits ampèremètres 56.1, 56.2, 56.3 étant situés entre le convertisseur monophasé-triphasé 38.1 et les première, deuxième et troisième bornes de sortie 44.3, 44.4, 44.5 de l'unité de commande moteur 38, les différents ampèremètres 56.1, 56.2, 56.3 étant reliés au microcontrôleur 58.

Le principe de fonctionnement de l'installation électrique 30 est décrit au regard des figures 2 à 6.

En fonctionnement normal, le système de découplage 40 du générateur électrique 34 et la protection interne MCU 46 sont à l'état fermé. Les protections internes moteurs 52.1, 52.2, 52.3 sont à l'état ouvert, comme illustré sur les figures 2 et 3.

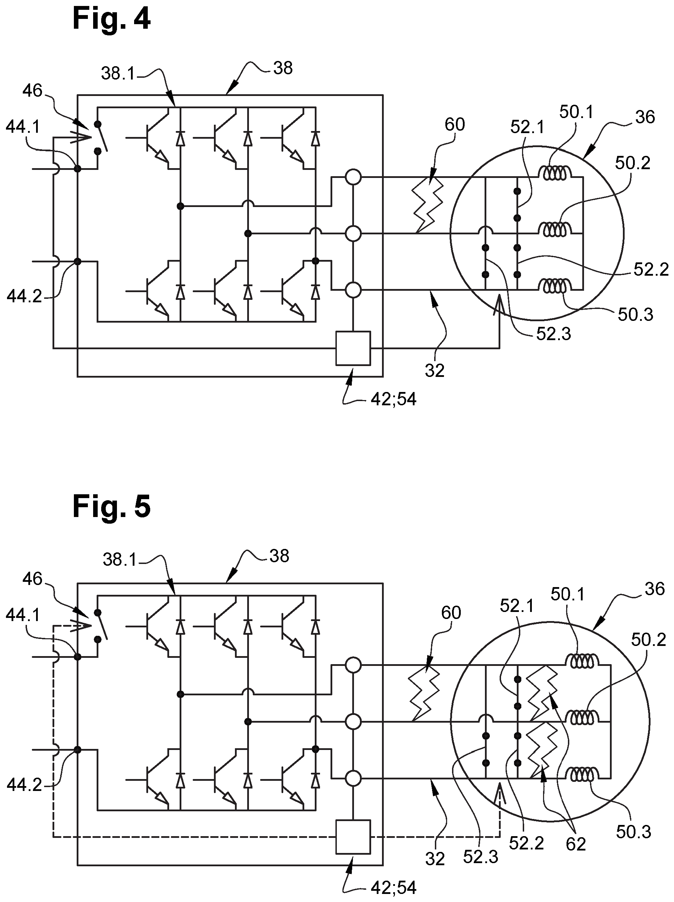

Comme illustré sur la figure 3, lorsqu'un court-circuit 60 apparaît au niveau du réseau électrique 32 en amont ou en aval de l'unité de commande moteur 38, ce dernier est détecté par le système de détection 42, 54. Comme illustré sur la figure 4, le système de détection 42, 54 transmet un signal de commande au système de découplage 40 et/ou à la protection interne MCU 46 ainsi qu'aux protections internes moteurs 52.1, 52.2, 52.3. A réception de ce signal de commande, le système de découplage 40 passe à l'état ouvert si bien que le réseau électrique 32 n'est plus alimenté en énergie électrique par le générateur électrique 34 et/ou la protection interne MCU 46 passe à l'état ouvert. Les protections internes moteurs 52.1, 52.2, 52.3 passent à l'état fermé.

Comme illustré sur la figure 5, la motorisation électrique 36 génère au moins un courant de régénérescence 62 qui est bloqué par les protections internes moteurs 52.1, 52.2, 52.3 à l'intérieur de la motorisation électrique 36 qui fonctionne en court-circuit interne. Ainsi, les courants de régénérescence 62 ne se propagent pas vers le réseau électrique 42.

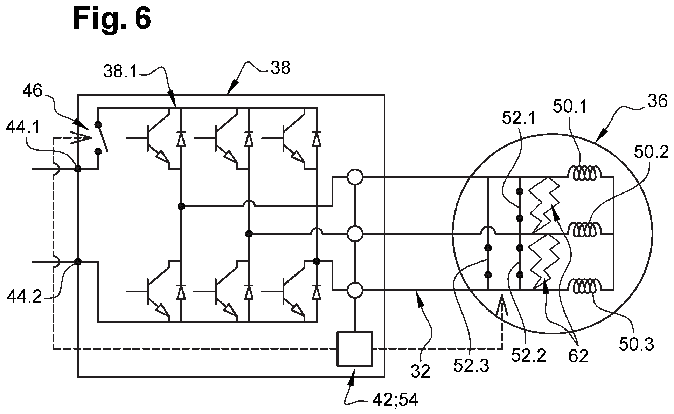

Le court-circuit 60 du réseau électrique 32 n'étant plus alimenté, il s'éteint comme illustré sur la figure 6.

Cette solution permet de protéger le réseau électrique tout en limitant l'augmentation de la masse embarquée, ce qui se traduit par une réduction de l'énergie consommée par l'aéronef.

## Revendications

1. Installation électrique comprenant :
- au moins un réseau électrique (32),
- au moins un générateur électrique (34),
- au moins une motorisation électrique (36) comportant plusieurs bornes d'entrée (48.1, 48.2, 48.3) reliées au réseau électrique (32),
- au moins un système de découplage (40) configuré pour découpler le générateur électrique (34),
- au moins un système de détection (42) configuré pour détecter un courant de court-circuit et contrôler le système de découplage (40) ;
**caractérisée en ce que** la motorisation électrique (36) comprend au moins une protection interne moteur (52.1, 52.2, 52.3) pilotable en cas de détection d'un court-circuit et configurée pour occuper un état ouvert dans lequel la motorisation électrique (36) peut être alimentée en énergie électrique et un état fermé dans lequel ladite au moins une protection interne moteur (52.1) génère un court-circuit interne à la motorisation électrique (36), empêchant la propagation d'au moins un courant de régénérescence (62) vers le réseau électrique (32).

2. Installation électrique selon la revendication 1, **caractérisée en ce que** ladite au moins une protection interne moteur (52.1, 52.2, 52.3) est configurée pour isoler les deux bornes d'entrée (48.1, 48.2, 48.3) d'au moins un couple de bornes d'entrée (48.1, 48.2, 48.3) à l'état ouvert et les relier à l'état fermé.

3. Installation électrique selon la revendication précédente, **caractérisée en ce que** la motorisation électrique (36) comprend une protection interne moteur (52.1, 52.2, 52.3) pour chaque couple de bornes d'entrée (48.1, 48.2, 48.3).

4. Installation électrique selon la revendication précédente, **caractérisée en ce que** la motorisation électrique (36) comprend des première, deuxième et troisième bornes d'entrée (48.1, 48.2, 48.3), une première protection interne moteur (52.1) reliant les première et deuxième bornes d'entrée (48.1, 48.2), une deuxième protection interne moteur (52.2) reliant les deuxième et troisième bornes d'entrée (48.2, 48.3) ainsi qu'une troisième protection interne moteur (52.3) reliant les première et troisième bornes d'entrée (48.1, 48.3).

5. Installation électrique selon l'une des revendications précédentes, **caractérisée en ce que** ladite au moins une protection interne moteur (52.1, 52.2, 52.3) est irréversible et configurée pour occuper un état ouvert ainsi qu'un état définitivement fermé à réception d'un signal de commande.

6. Installation électrique selon la revendication précédente, **caractérisée en ce que** ladite au moins une protection interne moteur (52.1, 52.2, 52.3) est un interrupteur pyrotechnique.

7. Installation électrique selon l'une des revendications 1 à 4, **caractérisée en ce que** ladite au moins une protection interne moteur (52.1, 52.2, 52.3) est réversible et configurée pour alternativement occuper un état ouvert et un état fermé.

8. Installation électrique selon l'une des revendications précédentes, **caractérisée en ce que** l'installation électrique comprend au moins un système de détection (54) configuré pour détecter un courant de court-circuit dans le réseau électrique (32) et contrôler l'état ouvert/fermé d'au moins ladite protection interne moteur (52.1, 52.2, 52.3) de la motorisation électrique (36).

9. Installation électrique selon la revendication précédente, **caractérisée en ce que** les systèmes de détection (42, 54) configurés pour contrôler les états du système de découplage (40) et de ladite au moins une protection interne moteur (52.1, 52.2, 52.3) forment un unique et même système de détection.

10. Installation électrique selon l'une des revendications 8 à 9, **caractérisée en ce que** le système de détection (54) est configuré pour simultanément contrôler toutes les protections internes moteurs (52.1, 52.2, 52.3).

11. Aéronef comprenant au moins une installation électrique selon l'une des revendications précédentes.
